# EUROPEAN PATENT SPECIFICATION

(11) **EP 4 437 298 B1**
(45) Date of publication and mention of the grant of the patent: **18.02.2026**
(21) Application number: 21831352.6
(22) Date of filing: 26.11.2021
(51) Int. Cl.: F41G 1/38, G02B 23/14

(54) **AN OPTICAL DEVICE WITH A HINGED VIEWFINDER**
OPTISCHE VORRICHTUNG MIT SCHWENKBAREM SUCHER
DISPOSITIF OPTIQUE AYANT UN VISEUR À CHARNIÈRE

(43) Date of publication of application: 02.10.2024
(73) Proprietor: UAB "Yukon Advanced Optics Worldwide", 06326 Vilnius (LT)
(72) Inventor: ALSHEUSKI, Aliaksandr, 03151 Vilnius (LT)
(74) Representative: Zaboliene, Reda
(86) International application number: PCT/IB2021/061013
(87) International publication number: WO 2023/094863

(56) References cited:
- EP-A2- 2 615 407
- WO-A1-2019/162926
- WO-A2-2009/039546

## Description

### Field of the Invention

This disclosure relates to the optical devices, in particular to the optical device with a hinged viewfinder.

### Background art

The present optical devices like firearm scopes, spotting scopes, telescopes, binoculars, monocular, digital cameras, and other optical devices have many electronic components requiring a huge amount of power. Many optical devices include rechargeable or non-rechargeable batteries. However, the battery pack must ensure the energy supply for at least couple of hours working time of the optical device, especially in situations, when there isn't a possibility to re-charge the battery, for example in hunting. Thus, it should have enough capacity and/or can be easily replaced by the user. The big capacity battery packs usually have large dimensions and are attached outside or inside the optical device making its shape not convenient to mount on, for example, a rifle gun or a tripod. Integrating the battery pack into the optimal shape of the optical device, for example a tube shape (tube shape is practical as it allows convenient mounting riflescope to a firearm using conventional mounting rings), could solve this problem. However, the battery pack should have an easy access by the user in order to replace it.

Patent document US5867313A (published in 1999-02-02) discloses a multifunctional night vision monocular that is adapted for use by a soldier as a hand-held spotting scope, a helmet mounted scope, a head mounted scope, and a weapon mounted scope depending upon circumstances and the needs of the soldier. The night vision monocular is a self-contained unit capable of carrying its own power source. A universal mount on the bottom of the night vision monocular enables either a helmet mounting adaptor or a weapon sight mount to be quickly added to the monocular. The night vision monocular contains a GEN III image intensifier tube positioned between an objective lens assembly and an eyepiece lens assembly. The housing of the night vision monocular opens in a plane perpendicular to the optical axis, thereby enabling easy access to the various optical elements for repairs, maintenance and replacement. The eyepiece lens assembly contains an externally threaded region wherein the eyepiece lens assembly threads into the interior of the housing neck region.

However, to remove the eyepiece, it must be unscrewed and can be accidentally dropped on the ground and damaged, or lost. In the above mentioned patent document, removing the eyepiece doesn't provide an access to the battery, because the battery is mounted on the bottom side of the device making the device shape not convenient to mount it on, for example, a rifle gun.

Patent document GB2335752A (published in 1999-09-29) discloses a camera with movable viewfinder. The camera has at least one viewfinder which can be moved from its operational position to a hidden position when not in use. There is preferably a recess into which the viewfinder moves to be hidden. The viewfinder may be rotated on a hinge or pushed into and pulled from the recess. The viewfinder is connected to the camera body via a hinge, and the viewfinder is pivotally rotatable about the hinge. When the camera is in use, the viewfinder is rotated to a viewing position outside the camera body to be used. When the camera is not in use, the viewfinder can be rotated into the recessed portion, i.e. rotated to a hidden position inside the camera body. However, the connection of viewfinder doesn't provide an internal access of the camera.

Patent document JP2011087255A (published in 2011-04-28) discloses a viewfinder and a video camera. The viewfinder includes a body having a liquid crystal display panel as a display body, a folding part which is provided turnably by a first rotary support, i.e., a hinge at one end of the body on the liquid crystal display panel side while having a mirror that bends an optical path in the shape of L character and opens and closes the one end, and a loupe which is provided turnably by a second rotary support, i.e., a hinge, at the other end of the folding part on the reverse side of the body and opens and closes the other end. Patent document CN201837807U discloses a totally-closed foldable type LCD viewfinder for a DSLR (digital singular lens reflex) comprising an optical lens assembly and a lens holder, as well as a totally-closed lens hood and a connecting frame, wherein the totally-closed lens hood is connected with the lens holder by a hinge, a transparent layer is arranged on the connecting frame that is fixedly arranged on a frame of an LCD screen, and the totally-closed lens hood and the connecting frame are fastened by a switch. In both previous patent documents, a hinge connection is used to attach the viewfinder in foldable manner. However, the viewfinder cannot move in longitudinal direction providing, for example, an easy access to the removable battery.

Patent document WO2019162926A1 (published in 2019-08-29) discloses a digitally-based, thermal imaging device comprising a tube-shaped body, a receiving optical sensor, a viewing computer display, a rechargeable battery, a user-replaceable battery, an integrated control mechanism turret, and a data transfer interface turret. The removable battery turret cap is used to secure the user-replaceable battery within the battery turret. The tube-shaped body can be configured to be separable to permit user replacement of the internal rechargeable battery. The tube-shaped body could be in two-piece configuration that is screwed together once the internal rechargeable battery is installed. In this configuration, the two pieces of the tube-shaped body can be unscrewed, separated, the internal rechargeable battery replaced with a new battery, and the two pieces of the tube-shaped body screwed back together. However, the use of screwed connection doesn't provide a very fast access to the battery and is not convenient for the user, because two parts must be separated.

Patent document WO2009/039546 A2 discloses an optical device such as a telescope, a sighting device, or a sighting telescope having at least one switching element acting between an energy source and a load for influencing the function of the optical device by a user. Fig. 12 discloses an eyepiece section with a movement element in the form of a hinge closing the eyepiece in the rest position.

Patent document EP2615407 A2 discloses a rotatable adjustment knob mountable to an optical or electronic device for rotation about an axis extending outwardly from the device. The knob body has an opening into a battery compartment sized to receive a battery. A lid is pivotably attached to the knob body for movement between a closed position in which the lid covers the opening, and an open position in which the lid is pivoted away from the opening to provide access to the battery compartment. The lid remains attached to the knob body while in both the open and closed positions for rotation with the knob body about the axis. A resilient seal confronts the knob body and the lid while the lid is in the closed position to thereby seal the opening and the battery compartment.

In the present invention, the viewfinder is attached to the battery compartment by a hinge connection, wherein the battery compartment is located inside the tube-shaped body and configured to move in longitudinal direction, in order to open the viewfinder to provide an easy access to the removable battery located in the battery compartment. Such type of connection allows to locate the battery compartment together with removable battery inside the tube-shaped body, thus the optimal shape of the optical device can be achieved and said device can be easily mounted on, for example, a rifle gun or a tripod.

### Summary of the Invention

The present invention provides an optical device with a hinged eyepiece. The optical device at least comprises: a tube-shaped body; a sensing module with objective lens; a battery compartment, located inside the tube-shaped body, and configured to move in longitudinal direction of the tube-shaped body; a removable battery located in the battery compartment; an electronic viewfinder attached to the battery compartment; a locking nut, attached on the tube-shaped body, and configured to release and lock a longitudinal movement of an assembly of the electronic viewfinder and battery compartment. The electronic viewfinder is attached to the battery compartment by a hinge connection pivotally connecting the electronic viewfinder to the battery compartment allowing the electronic viewfinder to fold against the battery compartment. The eyepiece can comprise fixing means, at least one locking groove and an external thread. The fixing means is configured to set the electronic viewfinder in a position perpendicular to longitudinal axis of the tube-shaped body. The locking groove is configured to lock the electronic viewfinder with the battery compartment, when the electronic viewfinder is placed in the initial position. The external thread of the electronic viewfinder is configured to fully attach the electronic viewfinder to the tube-shaped body with the locking nut. The tube-shaped body comprises an external thread configured to mount the locking nut.

The presented configuration of the components makes optical device compact and convenient to use. An easy access to the battery location extends the usability of the optical device.

### Brief Description of the Drawings

Fig. 1. depicts a front view of the optical device.
Fig. 2. depicts a detailed view of the eyepiece attachment.

### Detailed description of the invention

The following detailed description describes an optical device with a hinged viewfinder. The term "optical device" includes, but not limits to, firearm scopes, thermal imaging rifle scopes, spotting scopes, telescopes, binoculars, monocular, digital cameras, and other optical devices. The present invention discloses the optical device comprising at least a tube-shaped body, a sensing module with objective lens, an electronic viewfinder, a locking nut, a battery compartment and removable battery, wherein the electronic viewfinder is attached to the battery compartment by a hinge connection.

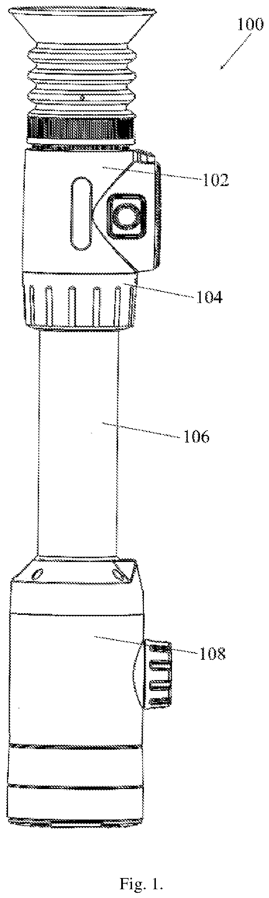

While optical device (100) is illustrated in the form factor of a firearm scope (Fig. 1), other implementations of the optical device are not limited to the illustrated form, locations/orientation of various components, and the like.

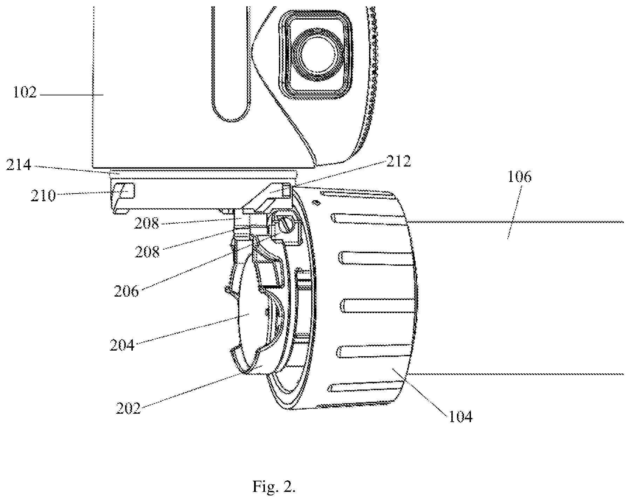

The illustrated optical device (100) in Fig 1. includes an electronic viewfinder (102), locking nut (104), tube-shaped body (106) and sensing module with objective lens (108). Refer to Fig. 2 for a battery compartment (202), internal battery (204) and hinge connection (206) not displayed in Fig. 1.

An electronic viewfinder (102) is configured to display an image captured by sensing module with objective lens (108). The eyepiece (102) is attached to the battery compartment (202), located inside the tube-shaped body (106), by a hinge connection (206) in order to permit an opening of said eyepiece (102) to reach the removable battery (204) located in the battery compartment (202). A hinge connection (206) pivotally connects the electronic viewfinder (102) to the battery compartment (202) allowing the electronic viewfinder (102) to fold against the battery compartment (202). The hinge connection (206) is provided with a screw or a pin, in order to detach the electronic viewfinder (102) from the battery compartment (202).

The tube-shaped body (106) comprises an external thread configured to join the locking nut (104) provided with an internal thread. The tube-shaped body (106) is configured to permit mounting on equipment (for example, a firearm or tripod) using mounting systems similar to those used in mounting optical devices. For example, the tube-shaped body can be mounted to equipment using a ring-type mounting system.

The locking nut (104), attached on the tube-shaped body (106), is configured to release and lock the longitudinal movement of an assembly of the electronic viewfinder (102) and battery compartment (202). The locking nut (104) also attaches the electronic viewfinder (102) to the tube-shaped body (106). The battery compartment (202) together with attached electronic viewfinder (102) is released by rotating the locking nut (104) until the battery compartment (202) together with attached electronic viewfinder (102) is free to move in longitudinal direction of the tube-shaped body (106). The battery compartment (202) is moved in longitudinal direction in a distance allowing the electronic viewfinder (102) to fold against the battery compartment (202) in a position perpendicular to longitudinal axis of the tube-shaped body (106). The said position can be also set by fixing means (208) attached at the front end of the electronic viewfinder (102). After the folding the electronic viewfinder (102) against the battery compartment (202), a removable battery (204) can be easily removed by pulling it out from the battery compartment (202).

A removable battery (204) is used to provide power to components and functions associated with the illustrated optical device (100). For example, the removable battery (204) can be used to power the electronic viewfinder (102) and/or sensing module with objective lens (108). The removable battery (204) can include rechargeable/non-rechargeable batteries like lead-acid, nickelcadmium (NiCd), nickel-metal hydride (NiMH), lithium-ion (Li-ion), lithium-ion polymer (Li-ion polymer), or other suitable battery technologies consistent with this disclosure. The rechargeable removable battery (204) can be charged directly, using for example at least one USB and/or micro-USB port, located on the outer side of the optical device. For this particular case, the removable battery (204) needs to be replaced only at the end of its lifecycle.

After the removable battery (204) is removed or replaced, the electronic viewfinder (102) can be placed to its initial position. The electronic viewfinder (102) is folded back to the initial position until its longitudinal axis coincides with the longitudinal axis of the battery compartment (202). To fix the electronic viewfinder (102) in the initial position, at least one locking groove (210), attached at the front end of the electronic viewfinder (102), can be used. The electronic viewfinder (102) can comprise the guiding grooves (212), attached at the front end of the electronic viewfinder (102). The guiding grooves (212) are used to ensure smooth attachment of the electronic viewfinder (102) to the battery compartment (202). After the electronic viewfinder (102) is placed to its initial position and locked with the battery compartment (202), the whole assembly is moved towards the longitudinal direction of tube-shaped body (106). The locking nut (104) is used to lock the assembly of the electronic viewfinder (102) and the battery compartment (202) movement in longitudinal direction by rotating the said locking nut (104) until its internal thread reaches an external thread (214) of the electronic eyepiece (102), located at the front end of the electronic eyepiece (102). After the locking nut (104) is in touch with the external thread (214), the electronic viewfinder (102) is fully attached to the tube-shaped body (106).

A sensing module with objective lens (108) is configured to capture image. In one embodiment, the sensing module with objective lens (108) is configured as a single body with the tube-shaped body (106). In other embodiment, the sensing module with objective lens (108) can be configured as a separate from the tube-shaped body (106). In this case, the sensing module with objective lens (108) can be either screwed together with tube-shape body (106), or either the same hinge connection (206) can be used for the sensing module with objective lens (108) attachment in the same manner as presented above.
In prefered embodiment, the sensing module with objective lens (108) is pivotally attached to the battery compartment (202) via a hinge connection (206), wherein the said hinge connection (206) pivotally connects the sensing module (108) to the battery compartment (202) allowing the said sensing module (108) to fold against the battery compartment (202).
The longitudinal movement of the assembly of sensing module (108) and battery compartment (202) is locked and released by locking nut (104) that is also used to fully attach the sensing module (108) to the tube-shaped body (106).

## Claims

1. An optical device (100) comprising:
a tube-shaped body (106),
a sensing module with objective lens (108),
a battery compartment (202) located inside the tube-shaped body (106), and configured to move in longitudinal direction of the tube-shaped body (106),
a removable battery (204) located in the battery compartment (202),
an electronic viewfinder (102) attached to the battery compartment (202),
a locking nut (104) attached on the tube-shaped body (106), and configured to release and lock a longitudinal movement of an assembly of the electronic viewfinder (102) and battery compartment (202);
**characterized in that,** the electronic viewfinder (102) is attached to the battery compartment (202) by a hinge connection (206) pivotally connecting the electronic viewfinder (102) to the battery compartment (202) allowing the electronic viewfinder (102) to fold against the battery compartment (202).

2. The optical device according to claim 1, **characterized in that,** the electronic viewfinder (102) comprises fixing means (208), attached at the front end of the electronic viewfinder (102), and configured to set the electronic viewfinder (102) in a position perpendicular to longitudinal axis of tube-shaped body (106).

3. The optical device according to any of preceding claims, **characterized in that,** the electronic viewfinder (102) further comprises at least one locking groove (210), attached at the front end of the electronic viewfinder (102), and configured to lock the electronic viewfinder (102) with the battery compartment (202), when the electronic viewfinder (102) is placed in an initial position.

4. The optical device according to any of preceding claims, **characterized in that** the electronic viewfinder (102) further comprises an external thread (214) located at the front end of the electronic viewfinder (102).

5. The optical device according to claim 1, **characterized in that** the tube-shaped body (106) comprises an external thread configured to mount the locking nut (104).

6. The optical device according to claim 1, **characterized in that** the sensing module with objective lens (108) is attached to the battery compartment (202) by a hinge connection (206) pivotally connecting the sensing module (108) to the battery compartment (202) allowing the said sensing module (102) to fold against the battery compartment (202).

## Patentansprüche

1. Optische Vorrichtung (100) umfassend:
einen röhrenförmigen Körper (106),
ein Abtastmodul mit Objektiv (108),
ein Batteriefach (202), das sich im Inneren des röhrenförmigen Körpers (106) befindet und dafür ausgelegt ist, sich in Längsrichtung des röhrenförmigen Körpers (106) zu bewegen,
eine entfernbare Batterie (204), die sich in dem Batteriefach (202) befindet,
einen elektronischen Sucher (102), der an dem Batteriefach (202) angebracht ist,
eine Sicherungsmutter (104), die an dem röhrenförmigen Körper (106) angebracht ist und dafür ausgelegt ist, eine Längsbewegung einer Anordnung des elektronischen Suchers (102) und des Batteriefachs (202) freizugeben und zu verriegeln;
**dadurch gekennzeichnet dass** der elektronische Sucher (102) an dem Batteriefach (202) durch eine Scharnierverbindung (206) angebracht ist, die den elektronischen Sucher (102) schwenkbar mit dem Batteriefach (202) verbindet, wodurch sich der elektronische Sucher (102) gegen das Batteriefach (202) falten lässt.

2. Die optische Vorrichtung nach Anspruch 1, **dadurch gekennzeichnet, dass** der elektronische Sucher (102) Befestigungsmittel (208) umfasst, die am vorderen Ende des elektronischen Suchers (102) angebracht und dafür ausgelegt sind, den elektronischen Sucher (102) in einer Position senkrecht zur Längsachse des röhrenförmigen Körpers (106) einzustellen.

3. Die optische Vorrichtung nach einem der vorstehenden Ansprüche, **dadurch gekennzeichnet, dass** der elektronische Sucher (102) ferner mindestens eine Verriegelungsnut (210) umfasst, die am vorderen Ende des elektronischen Suchers (102) angebracht und dafür ausgelegt ist, den elektronischen Sucher (102) mit dem Batteriefach (202) zu verriegeln, wenn der elektronische Sucher (102) in einer Anfangsposition platziert ist.

4. Die optische Vorrichtung nach einem der vorstehenden Ansprüche, **dadurch gekennzeichnet, dass** der elektronische Sucher (102) ferner ein Außengewinde (214) umfasst, das sich am vorderen Ende des elektronischen Suchers (102) befindet.

5. Die optische Vorrichtung nach Anspruch 1, **dadurch gekennzeichnet, dass** der röhrenförmige Körper (106) ein Außengewinde umfasst, das dafür ausgelegt ist, die Sicherungsmutter (104) zu montieren.

6. Die optische Vorrichtung nach Anspruch 1, **dadurch gekennzeichnet, dass** das Abtastmodul mit Objektiv (108) an dem Batteriefach (202) durch eine Scharnierverbindung (206) angebracht ist, die das Abtastmodul (108) schwenkbar mit dem Batteriefach (202) verbindet, wodurch sich das besagte Abtastmodul (102) gegen das Batteriefach (202) falten lässt.

## Revendications

1. Dispositif optique (100) comprenant :
un corps en forme de tube (106),
un module de détection avec objectif (108),
un compartiment à batterie (202) situé à l'intérieur du corps en forme de tube (106), et
configuré pour se déplacer dans la direction longitudinale du corps en forme de tube (106),
une batterie amovible (204) située dans le compartiment à batterie (202),
un viseur électronique (102) fixé au compartiment à batterie (202),
un écrou de blocage (104) fixé sur le corps en forme de tube (106), et configuré pour libérer et bloquer un mouvement longitudinal d'un ensemble du viseur électronique (102) et du compartiment à batterie (202);
**caractérisé en ce que** le viseur électronique (102) est fixé au compartiment à batterie (202) par une liaison par charnière (206) reliant de manière pivotante le viseur électronique (102) au compartiment à batterie (202), permettant au viseur électronique (102) de se rabattre contre le compartiment à batterie (202).

2. Le dispositif optique selon la revendication 1, **caractérisé en ce que** le viseur électronique (102) comprend des moyens de fixation (208), fixés à l'extrémité avant du viseur électronique (102), et configurés pour régler le viseur électronique (102) dans une position perpendiculaire à l'axe longitudinal du corps en forme de tube (106).

3. Le dispositif optique selon l'une quelconque des revendications précédentes, **caractérisé en ce que** le viseur électronique (102) comprend en outre au moins une rainure de blocage (210), fixée à l'extrémité avant du viseur électronique (102), et configurée pour verrouiller le viseur électronique (102) avec le compartiment à batterie (202), lorsque le viseur électronique (102) est placé dans une position initiale.

4. Le dispositif optique selon l'une quelconque des revendications précédentes, **caractérisé en ce que** le viseur électronique (102) comprend en outre un filetage externe (214) situé à l'extrémité avant du viseur électronique (102).

5. Le dispositif optique selon la revendication 1, **caractérisé en ce que** le corps en forme de tube (106) comprend un filetage externe configuré pour monter l'écrou de blocage (104).

6. Le dispositif optique selon la revendication 1, **caractérisé en ce que** le module de détection avec objectif (108) est fixé au compartiment à batterie (202) par une liaison par charnière (206) reliant de manière pivotante le module de détection (108) au compartiment à batterie (202), permettant audit module de détection (102) de se rabattre contre le compartiment à batterie (202).
